# EUROPEAN PATENT APPLICATION

(11) **EP 1 174 040 A1**
(43) Date of publication of application: **23.01.2002**
(21) Application number: 00830509.6
(22) Date of filing: 19.07.2000
(51) Int. Cl.: A23G 9/02

(54) **Support for ice-cream and similar foods**

(71) Applicant: Agliati S.r.l., Palazzago (Bergamo) (IT)
(72) Inventor: Agliati, Giovanni, 24040 Bonate Sopra BG (IT)
(74) Representative: Pizzoli, Antonio

(57) **Abstract**

Support for ice-cream and similar foods, comprising at least a container (1; 8) provided with an upper opening (2) and an internal partition wall (3; 9) of an impermeable material, which hermetically divides the container (1; 8) into an open upper recipient (4) suitable for containing a certain quantity of ice-cream or of a similar food (12), and a closed lower recipient (5) suitable for containing liquids (7), wherein at least the portion of the container (1; 8) corresponding to the lower recipient (5) is made of a liquid-proof material.

## Description

The present invention relates to a support for ice-cream and similar foods, and particularly to a support that can contain drinks and ice-cream at the same time.

It is known that generally a consumer has the need to satisfy his thirst, as soon as he has eaten an ice-cream which is often contained in supports formed of a conical container of eatable material.

Therefore, it is an object of the present invention to provide a support for ice-cream which allows to satisfy one's thirst as soon as he has eaten an ice-cream. Said object is obtained by a support for ice-cream whose main features are specified in the first claim and other features are specified in the following claims.

By virtue of the partition wall that hermetically divides the container into two recipients, of which at least one is made of a liquid-proof material, a drink can be put in this impermeable recipient and a certain quantity of ice-cream in the other recipient, so that the consumer can have the drink immediately as soon as he has eaten the ice-cream. For this purpose, the partition wall can be removed by the consumer or perforated by means of a drinking straw, fixed in a removable way to the container.

According to a particular aspect of the invention, the container can be made of a plastic material, preferably recycled, so as to obtain a cheap support for ice-cream, which can be thrown away after the use. Further, if made of plastic, the container can be provided with advertising writings.

According to another particular aspect of the invention, the container can have a conical or frustoconical shape, so that it can be possibly housed inside an eatable support for ice-cream of the known type.

According to a further particular aspect of the invention, the partition wall can be comprised in a plug which covers almost completely the internal surface of the upper recipient, which is suitable for containing the ice-cream. By this measure, it is possible to fill the container with a drink chosen by the consumer, immediately before closing the lower recipient and putting ice-cream into the upper recipient.

Further advantages and features of the support according to the present invention will appear to those skilled in the art from the following detailed and nonlimiting description of two embodiments thereof with reference to the accompanying drawings, wherein:
- figure 1 shows a perspective view of the first embodiment;
- figure 2 shows a cross-sectioned lateral view of the embodiment of figure 1;
- figure 3 shows a cross-sectioned lateral view of the second embodiment; and
- figure 4 shows a top plan view of the embodiment of figure 3.

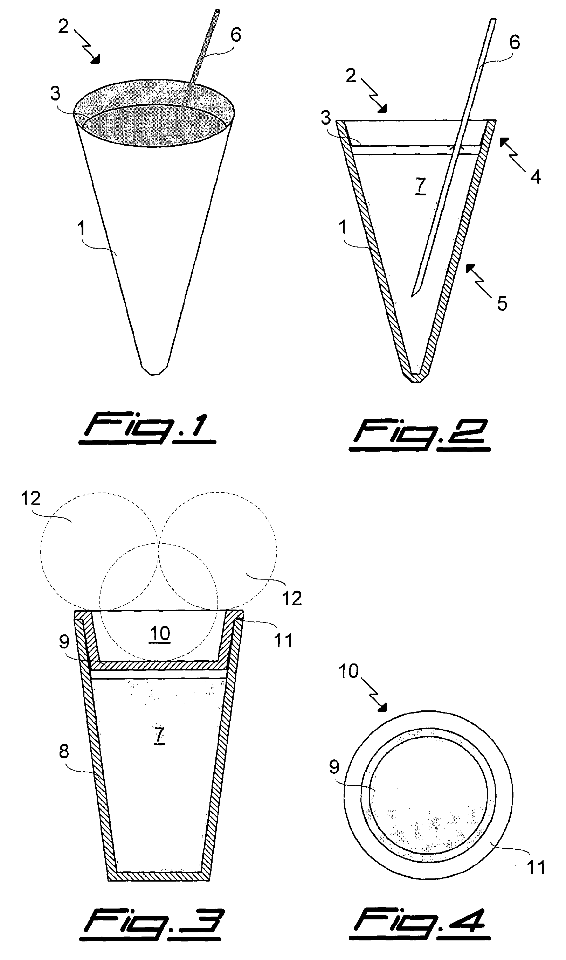

With reference to figures 1 and 2, the support for ice-cream according to the first embodiment of the invention comprises in a known way a container 1, having for example a conical shape, which is provided with an upper opening 2, corresponding to the base ofthe cone.

Container 1 is suitably made of a liquid-proof material, for example of a plastic material, and is provided with an internal partition wall 3 which hermetically divides it into an open upper recipient 4, for example having a substantially frustoconical shape, and a closed lower recipient 5, having for example a substantially conical shape. The upper recipient is suitable for containing a certain quantity of ice-cream or of a similar food. Particularly, in the present embodiment of the invention, the partition wall 3 is formed of a sheet of impermeable material, for instance aluminum, which is fixed in a known way to the internal surface of the upper recipient 4. Said sheet can be removed or perforated by the user, for example by means of a drinking straw 6 which is preferably fixed to the outside of container 1 in a removable way, so that it is possible to reach the inside of the lower recipient 5 wherein liquids 7, such as a drink, can be contained.

Now, with reference to figures 3 and 4, it can be seen that in the support for ice-cream according to the second embodiment of the invention, container 8 has a frustoconical shape and is also provided with an upper opening, which corresponds to the larger base of the truncated cone. The partition wall 9 of this embodiment is included in a plug 10 made of an impermeable material, particularly a plastic material. Plug 10 has a substantially frustoconical shape, having the upper edge provided with an annular relief 11 suitable for resting on the upper edge of container 8 and closing it from the top. In the frustoconical plug 10, which covers almost completely the internal surface of the upper recipient 4 of the container, can be put a certain quantity 12 of ice-cream or similar food (indicated in figure 3 with dotted lines).

It is obvious that in other embodiments of the present invention the container can have a different shape from the above described ones, for example cylindrical, pyramidal, frustopyramidal, parallelepipedal, prismatic, etc. Besides, the container can be made of materials other than plastic, provided that at least the portion corresponding to the lower recipient is made of a liquid-proof material.

## Claims

1. Support for ice-cream and similar foods, comprising at least one container (1; 8) provided with an upper opening (2), **characterized in that** the container (1; 8) is provided with an internal partition wall (3; 9) of an impermeable material, which hermetically divides the container (1; 8) into an open upper recipient (4) suitable for containing a certain quantity of ice-cream or of a similar food (12), and a closed lower recipient (5) suitable for containing liquids (7), wherein at least the portion of the container (1; 8) corresponding to the lower recipient (5) is made of a liquid-proof material.

2. Support according to the preceding claim, **characterized in that** the partition wall (3; 9) is removable.

3. Support according to claim 1 or 2, **characterized in that** the partition wall (3; 9) is formed of a sheet of impermeable material, for instance aluminum, fixed to the internal surface of the upper recipient (4) of the container (1; 8).

4. Support according to the preceding claim, **characterized in that** the partition wall (3; 9) can be perforated by means of a drinking straw (6).

5. Support according to the preceding claim, **characterized in that** the drinking straw (6) is fixed in a removable way to the outside of the container (1; 8).

6. Support according to claim 1 or 2, **characterized in that** the partition wall (3; 9) is comprised in a plug (10) made of an impermeable material, which covers almost completely the internal surface of the upper recipient (4) of the container (1; 8).

7. Support according to the preceding claim, **characterized in that** the plug (10) is provided with a substantially frustoconical shape having the upper edge provided with an annular relief (11) suitable for resting on the upper edge of the container (1; 8) and closing it from the top.

8. Support according to one of the preceding claims, **characterized in that** the container (1; 8) is made of a liquid-proof material, particularly a plastic material.

9. Support according to one of the preceding claims, **characterized in that** the container (1; 8) has a substantially conical or frustoconical shape.
